# EUROPEAN PATENT SPECIFICATION

(11) **EP 4 394 696 B1**
(45) Date of publication and mention of the grant of the patent: **01.04.2026**
(21) Application number: 22860072.2
(22) Date of filing: 08.07.2022
(51) Int. Cl.: G06V 10/77, G06V 20/52, G06V 20/64, G06V 10/26, G06V 10/44, G01V 5/22, G06T 12/30, G01N 23/04

(54) **SECURITY CHECK CT OBJECT RECOGNITION METHOD AND APPARATUS**
VERFAHREN UND VORRICHTUNG ZUR ERKENNUNG VON CT-OBJEKTEN EINER SICHERHEITSÜBERPRÜFUNG
PROCÉDÉ ET APPAREIL DE RECONNAISSANCE D'OBJET CT DE CONTRÔLE DE SÉCURITÉ

(30) Priority: 27.08.2021 CN 202110998653
(43) Date of publication of application: 03.07.2024
(73) Proprietor: Nuctech Company Limited, TongFang Building Shuangqinglu Haidian District Beijing 100084 (CN); Tsinghua University, Haidian District, Beijing 100084 (CN)
(72) Inventor: CHEN, Zhiqiang, Beijing 100084 (CN); ZHANG, Li, Beijing 100084 (CN); SUN, Yunda, Beijing 100084 (CN); ZHENG, Juan, Beijing 100084 (CN); WANG, Lu, Beijing 100084 (CN); YANG, Tao, Beijing 100084 (CN); LI, Dong, Beijing 100084 (CN)
(74) Representative: Cabinet Beau de Loménie
(86) International application number: PCT/CN2022/104606
(87) International publication number: WO 2023/024726

(56) References cited:
- CN-A- 108 882 897
- CN-A- 109 493 417
- CN-A- 109 975 335
- CN-A- 111 968 240
- CN-A- 112 598 619
- CN-A- 113 792 623
- US-A1- 2014 010 437
- US-A1- 2015 332 448
- US-A1- 2015 332 498
- US-A1- 2021 049 397
- US-A1- 2021 097 258
- YANG ANQI ET AL: "SliceNets - A Scalable Approach for Object Detection in 3D CT Scans", 2021 IEEE WINTER CONFERENCE ON APPLICATIONS OF COMPUTER VISION (WACV), IEEE, 3 January 2021 (2021-01-03), pages 335 - 344, XP033926724, DOI: 10.1109/WACV48630.2021.00038
- QIAN WANG ET AL: "A Reference Architecture for Plausible Threat Image Projection (TIP) Within 3D X-ray Computed Tomography Volumes", ARXIV.ORG, CORNELL UNIVERSITY LIBRARY, ITHACA, NY 14853, 15 January 2020 (2020-01-15), XP081579353

## Description

### CROSS-REFERENCE TO RELATED APPLICATION(S)

The present disclosure claims priority to Chinese patent Application No. 202110998653.3 filed on August 27, 2021.

### TECHNICAL FIELD

The present disclosure relates to a field of security inspection computed tomography (CT), and in particular to a method and an apparatus of identifying at least one target object for a security inspection CT.

### BACKGROUND

At present, in a field of security inspection, CT devices are often used to identify target objects such as prohibited items. When identifying a target object using a security inspection CT device, traditional technologies mainly include: obtaining a three-dimensional tomographic image containing a material attribute information by using a CT reconstruction technology, dividing the three-dimensional image into several suspected objects, and performing statistics and classification of material attributes on the suspected object. For example, the conference paper "SliceNets - A Scalable Approach for Object Detection in 3D CT Scans" by Anqui Yang et al., Proc. 2021 IEEE Winter Conference on Applications of Computer Vision (WACV), 3 January 2021, pages 335-344, DOI: 10.1109/WACV48630.2021.00038, discloses a generic framework for object detection and segmentation in high-resolution 3D volumes that encodes 3D volumes into multiple 2D slices and leverages fast image-based models to obtain volumetric predictions. Based on this strategy, the authors of the paper designed two algorithms, called SliceNets, that exploit image-based CNNs for object detection and segmentation in 3D baggage CT scans. By training deep neural networks solely on lower-dimensional slices, their approach provides a scalable way for training classification and segmentation modules for high-dimensional signals.

Although the above-mentioned traditional technologies may have good performance in identifying prohibited items with strong separability in material properties such as explosives and drugs, they exhibit obvious limitations in identifying target objects with strong three-dimensional shape features and complex material composition and physical properties.

In order to solve such limitations, Patent Document 1 proposes a method and an apparatus for CT detection, which may separately identify a three-dimensional tomographic image and a two-dimensional image of an object, then obtain a recognition result of explosives through the former, and obtain a recognition result of other prohibited items through the latter.
Patent document 1: 109975335A

### SUMMARY

Although Patent Document 1 attempts to improve the above limitations, the inventors of the present disclosure found through research that Patent Document 1 still has the following technical problems:
(1) A projection is only performed in a direction orthogonal to a traveling direction (Z direction) of an object during a detection process. Under some placement postures of the object, a projection region may be too small and a shape information may be incompletely expressed, so that it is difficult to accurately identify a target object. In addition, the projection performed in this way may cause the object to be blocked by other objects, and then the shape information of the object may be lost, so that it is difficult to accurately identify the target object.
(2) **In** this method, although a two-dimensional projection image obtained from the three-dimensional tomographic image may be used to identify prohibited items other than explosives, the identification operation is only limited to a two-dimensional plane, and a recognition result in a three-dimensional space may not be obtained. Since an information content of the two-dimensional image is significantly lower than that of the three-dimensional data, the advantages of the security inspection CT device may not be fully utilized without an effective integration of the two-dimensional recognition result.

The present disclosure proposes a method and an apparatus of identifying at least one target object for a security inspection CT, which may improve a recognition effect on a three-dimensional shaped target object.

Embodiments of the present disclosure provide a method of identifying at least one target object for a security inspection CT, including: performing a dimension reduction on three-dimensional CT data to generate a plurality of two-dimensional dimension-reduced views; performing a target identification on a plurality of two-dimensional views to obtain a set of two-dimensional semantic descriptions of the at least one target object, where the plurality of two-dimensional views include the plurality of two-dimensional dimension-reduced views; and performing a dimension increase on the set of two-dimensional semantic descriptions to obtain a three-dimensional recognition result of the at least one target object.

**In** the above-mentioned method of identifying the at least one target object for the security inspection CT, the performing a dimension increase on the set of two-dimensional semantic descriptions to obtain a three-dimensional recognition result of the at least one target object includes: mapping the set of two-dimensional semantic descriptions to a three-dimensional space by using a back-projection method, so as to obtain a three-dimensional probability map; and performing a feature extraction on the three-dimensional probability map to obtain the three-dimensional recognition result of the at least one target object.

**In** the above-mentioned method of identifying the at least one target object for the security inspection CT, the mapping the set of two-dimensional semantic descriptions to a three-dimensional space by using a back-projection method so as to obtain a three-dimensional probability map includes: mapping the set of two-dimensional semantic descriptions to the three-dimensional space by voxel driving or pixel driving so as to obtain a semantic feature matrix, and compressing the semantic feature matrix into the three-dimensional probability map.

**In** the above-mentioned method of identifying the at least one target object for the security inspection CT, the voxel driving includes: mapping each voxel in the three-dimensional CT data to a pixel in each two-dimensional view, querying and accumulating a two-dimensional semantic description information corresponding to the pixel, and generating the semantic feature matrix; and the pixel driving includes: mapping each pixel in the two-dimensional view to a straight line in the three-dimensional CT data, traversing each pixel in each two-dimensional view or each pixel in a region of interest , propagating a two-dimensional semantic description information corresponding to the pixel into the three-dimensional space along the straight line, and generating the semantic feature matrix, where the region of interest is given by the set of two-dimensional semantic descriptions.

**In** the above-mentioned method of identifying the at least one target object for the security inspection CT, in the voxel driving or the pixel driving, a correspondence relationship between the voxel and the pixel is obtained by a mapping function or a lookup table.

**In** the above-mentioned method of identifying the at least one target object for the security inspection CT, the performing a feature extraction on the three-dimensional probability map to obtain the three-dimensional recognition result of the at least one target object includes: performing the feature extraction on the three-dimensional probability map by using at least one or a combination of an image processing method, a classic machine learning method, or a deep learning method, so as to obtain a set of three-dimensional image semantic descriptions as the three-dimensional recognition result.

**In** the above-mentioned method of identifying the at least one target object for the security inspection CT, the performing a feature extraction on the three-dimensional probability map to obtain the three-dimensional recognition result of the at least one target object includes: performing a binarization on the three-dimensional probability map to obtain a three-dimensional binary map; performing a connected component analysis on the three-dimensional binary map to obtain at least one connected component; and generating the set of three-dimensional image semantic descriptions for the at least one connected component.

**In** the above-mentioned method of identifying the at least one target object for the security inspection CT, the performing a connected component analysis includes: performing a connected component labeling on the three-dimensional binary map, and performing a mask operation on each labeled region to obtain the at least one connected component.

**In** the above-mentioned method of identifying the at least one target object for the security inspection CT, the generating the set of three-dimensional image semantic descriptions for the at least one connected component includes: extracting all probability values for each connected component, performing a principal component analysis to obtain an analysis set, and statistically generating the set of three-dimensional image semantic descriptions by using the analysis set as a valid voxel volume of object.

In the above-mentioned method of identifying the at least one target object for the security inspection CT, the set of three-dimensional image semantic descriptions includes a category information and/or a confidence level, in units of one or more of voxels, three-dimensional volumes of interest, or three-dimensional CT images; or the set of three-dimensional image semantic descriptions includes at least one of a category information, a position information of the at least one target object, or a confidence level, in units of three-dimensional volumes of interest and/or three-dimensional CT images.

In the above-mentioned method of identifying the at least one target object for the security inspection CT, the position information includes a three-dimensional bounding box.

In the above-mentioned method of identifying the at least one target object for the security inspection CT, the set of two-dimensional semantic descriptions includes a category information and/or a confidence level, in units of one or more of pixels, regions of interest, or two-dimensional images; or the set of two-dimensional semantic descriptions includes at least one of a category information, a confidence level, or a position information of the at least one target object, in units of regions of interest and/or two-dimensional images.

In the above-mentioned method of identifying the at least one target object for the security inspection CT, the performing a target identification on each of the plurality of two-dimensional views includes: performing the target identification for two-dimensional images by using at least one or a combination of an image processing method, a classic machine learning method, or a deep learning method.

In the above-mentioned method of identifying the at least one target object for the security inspection CT, the performing a dimension reduction on three-dimensional CT data to generate a plurality of two-dimensional dimension-reduced views includes: setting a plurality of directions for the three-dimensional CT data; and projecting or rendering according to the plurality of directions.

In the above-mentioned method of identifying the at least one target object for the security inspection CT, the plurality of directions are arbitrary directions and are not limited to a direction orthogonal to a traveling direction of an object during a detection process.

In the above-mentioned method of identifying the at least one target object for the security inspection CT, the plurality of two-dimensional views further include a two-dimensional DR image, and the two-dimensional DR image is acquired by a DR imaging device.

In the above-mentioned method of identifying the at least one target object for the security inspection CT, the three-dimensional recognition result is projected onto the two-dimensional DR image and output as a recognition result of the two-dimensional DR image.

Embodiments of the present disclosure further provide an apparatus of identifying at least one target object for a security inspection CT, including: a dimension reduction module configured to perform a dimension reduction on three-dimensional CT data to generate a plurality of two-dimensional dimension-reduced views; a two-dimensional identification module configured to perform a target identification on a plurality of two-dimensional views to obtain a set of two-dimensional semantic descriptions of the at least one target object, where the plurality of two-dimensional views include the plurality of two-dimensional dimension-reduced views; and a dimension increase module configured to perform a dimension increase on the set of two-dimensional semantic descriptions to obtain a three-dimensional recognition result of the at least one target object.

Embodiments of the present disclosure further provide a machine-readable storage medium having a program thereon, where the program is configured to cause a computer to: perform a dimension reduction on three-dimensional CT data to generate a plurality of two-dimensional dimension-reduced views; perform a target identification on a plurality of two-dimensional views to obtain a set of two-dimensional semantic descriptions of the at least one target object, where the plurality of two-dimensional views include the plurality of two-dimensional dimension-reduced views; and perform a dimension increase on the set of two-dimensional semantic descriptions to obtain a three-dimensional recognition result of the at least one target object.

As described above, in the present disclosure, a dimension reduction is performed on three-dimensional CT data to generate a plurality of two-dimensional dimension-reduced views, a target recognition is performed using a plurality of two-dimensional views including the plurality of two-dimensional dimension-reduced views to obtain a set of two-dimensional semantic descriptions, and then a dimension increase is performed on the set of two-dimensional semantic descriptions to obtain a three-dimensional recognition result. That is, the dimensions are firstly reduced from three dimensions to two dimensions for identification and then increased to generate a three-dimensional result. In this way, it is possible to effectively recognize a target object with complex material composition and physical properties and having shape features through a two-dimensional identification, and also possible to effectively integrate two-dimensional recognition results to provide a three-dimensional recognition result with a rich information content. In this way, a recognition effect of the at least one target object may be improved, and requirements for real-time performance of a security inspection may be met.

### BRIEF DESCRIPTION OF THE DRAWINGS

FIG. 1 shows a flowchart of a method of identifying at least one target object for a security inspection CT according to a first embodiment;
FIG. 2 shows a flowchart of an example of a dimension reduction;
FIG. 3 shows a flowchart of an example of a dimension increase;
FIG. 4 shows a flowchart of an example of a three-dimensional feature extraction;
FIG. 5 shows a flowchart of a method of identifying at least one target object for a security inspection CT according to a second embodiment;
FIG. 6 shows a schematic diagram of an example of an apparatus of identifying at least one target object for a security inspection CT according to a third embodiment; and
FIG. 7 shows a schematic diagram of another example of an apparatus of identifying at least one target object for a security inspection CT according to the third embodiment.

### DETAILED DESCRIPTION OF EMBODIMENTS

Exemplary embodiments of the present disclosure will be described in more detail below with reference to the accompanying drawings. Although exemplary embodiments of the present disclosure are shown in the accompanying drawings, it should be understood that the present disclosure may be implemented in various forms and should not be limited to embodiments set forth herein. Rather, these embodiments are provided for a clearer understanding of the present disclosure.

The terms "first", "second", etc. in the specification and claims of the present disclosure are used to distinguish similar objects, rather than describe a specific order or sequence. It should be understood that data used in this way are interchangeable under appropriate circumstances so that embodiments of the present disclosure described herein may be implemented in an order other than that illustrated or described. Furthermore, the terms "include" and "have" and any variations thereof are intended to cover non-exclusive inclusions, such as processes, methods, systems, products or devices that include a series of steps or units, not limited to those explicitly listed, but may include other steps or units not expressly listed. Herein, the same or similar reference numerals represent constitute elements having the same or similar functions.

### <First Embodiment>

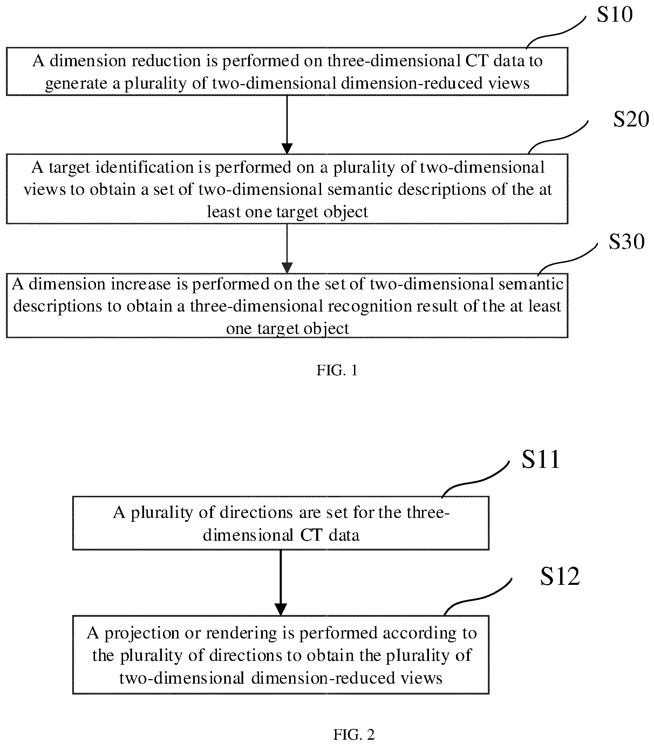

As the first embodiment of the present disclosure, a method of identifying at least one target object for a security inspection CT is provided. FIG. 1 shows a flowchart of a method of identifying at least one target object for a security inspection CT according to the first embodiment. The method of identifying the at least one target object for the security inspection CT is applicable to a security inspection CT system, and may be performed, for example, in a security inspection CT device or in a server connected to the security inspection CT device.

As shown in FIG. 1, in step S10, a dimension reduction is performed. That is, a dimension reduction is performed on three-dimensional CT data to generate a plurality of two-dimensional dimension-reduced views.

For example, as shown in FIG. 2, step S10 may include step S11 and step S12.

In step S11, a plurality of directions are set for the three-dimensional CT data. Here, the plurality of directions are arbitrary directions and are not limited to a specific direction such as a direction orthogonal to a traveling direction of an object during a detection process.

In addition, while setting the plurality of directions, or before and after setting the plurality of directions, optionally, it is possible to perform a preprocessing operation on three-dimensional volume data, such as filtering an invalid voxel and pre-calculating a geometric parameter required by projection or rendering, so that a subsequent processing speed may be improved.

In step S12, a projection or rendering is performed according to the plurality of directions to obtain the plurality of two-dimensional dimension-reduced views.

As an example, a ray casting may be performed based on a CT image slice sequence. From each pixel of the image, a ray may be emitted in a specific direction, and the ray passes through the entire image sequence. In this process, a sampling is performed on the image sequence to obtain an attribute or color information, and attribute or color values are accumulated according to a particular model until the ray passes through the entire image sequence. The finally obtained attribute or color value may be used as the dimensional-reduced two-dimensional view.

In the present disclosure, the two-dimensional dimension-reduced view is obtained by projecting in any direction, then it is possible to avoid that the dimension reduction is performed only in a specific direction, such as a direction orthogonal to the traveling direction of the object during the detection process. In this way, the following problems caused by performing the dimension reduction only in a specific direction may be solved: (1) under some placement postures of objects, an area of the object after dimension reduction is too small and a shape information is incompletely expressed, so that it is difficult to accurately identify the target object; (2) the shape information of the object is lost because the object is blocked by other objects, so that it is difficult to accurately identify the target object.

In step S20, a two-dimensional identification is performed. That is, a target identification is performed on a plurality of two-dimensional views to obtain a set of two-dimensional semantic descriptions of the at least one target object. Here, the plurality of two-dimensional views include the plurality of two-dimensional dimension-reduced views obtained in step S10 described above.

For example, at least one or a combination of an image processing method for two-dimensional images, a classic machine learning method, or a deep learning method may be used as a method of identifying at least one target object in a two-dimensional view.

For example, a two-dimensional view may be input into a neural network model and a set of two-dimensional semantic descriptions may be output.

For example, a deep learning-based target detection neural network may be used to detect a two-dimensional position of the at least one target object. A convolutional neural network used in a target detection task is a typical structure of deep learning in a computer vision task. Such convolutional neural network has characteristics of local connection, weight sharing, and spatial resampling, etc. These characteristics give the convolutional neural network a certain degree of translation and scaling invariance. Here, the set of two-dimensional semantic descriptions includes a category information and/or a confidence level, in units of one or more of pixels, regions of interest, or two-dimensional images. Alternatively, the set of two-dimensional semantic descriptions may include at least one of a category information, a confidence level, or a position information of the at least one target object, in units of regions of interest and /or two-dimensional images. The category information indicates a category to which the at least one target object belongs, such as guns, knives, etc. The position information may contain center coordinates, a bounding box, etc. The confidence level represents a possibility of an existence of the at least one target object, and may be a normalized scalar or vector.

In other words, the set of two-dimensional semantic descriptions includes at least one information selected from: a category information of the target object to which a pixel belongs, a confidence level, etc.; a category information of the at least one target object contained in a region of interest, a position information of the at least one target object, a confidence level, etc.; or a category information of the at least one target object contained in a two-dimensional image, a position information of the at least one target object, a confidence level, etc. The at least one information may be information contained in one group, or may be information contained in different groups.

In addition to the category information, the confidence level and the position information, the set of descriptions for two-dimensional semantic information may further include a posture of the at least one target object, a number of the at least one target object, and other semantic information.

The method of identifying the at least one target object for the two-dimensional view of the present disclosure is not particularly limited, as long as it is a method that may obtain the above-mentioned set of two-dimensional semantic descriptions based on the two-dimensional view.

As mentioned above, in the present disclosure, the two-dimensional recognition result of the at least one target object is expressed in the form of a set of two-dimensional semantic descriptions. Such set of two-dimensional semantic descriptions is input in step S30 and the dimensions are increased to three, so that the two-dimensional recognition results may be integrated into a three-dimensional result. In addition, the set of two-dimensional semantic descriptions is flexible, and may contain abundant information.

In step S30, a dimension increase is performed. That is, a dimension increase is performed on the set of two-dimensional semantic descriptions to obtain a three-dimensional recognition result of the at least one target object.

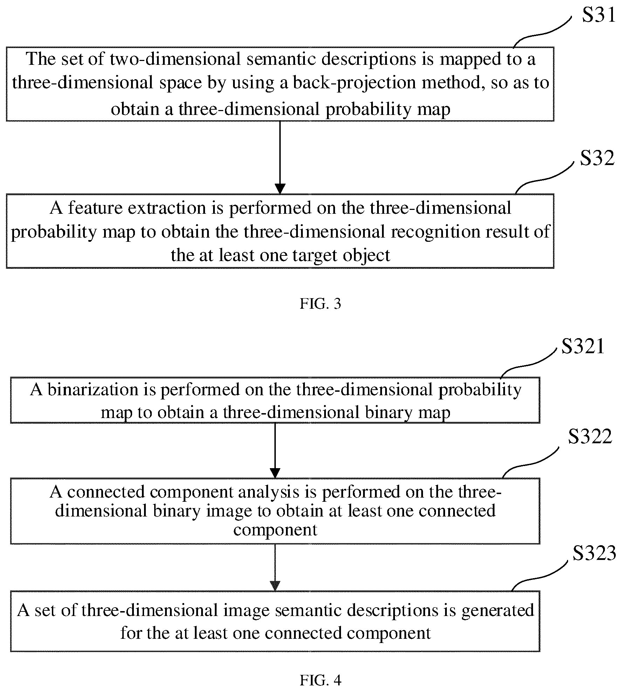

For example, as shown in FIG. 3, step S30 may include step S31 and step S32.

In step S31, the set of two-dimensional semantic descriptions is mapped to a three-dimensional space by using a back-projection method, so as to obtain a three-dimensional probability map. The back-projection may be considered as a reverse process of projection.

Optionally, the back-projection process may be implemented by voxel driving or pixel driving method. For example, it is possible to obtain a semantic feature matrix by voxel driving or pixel driving, and compress the semantic feature matrix into a three-dimensional probability map.

Here, the voxel driving includes: mapping each voxel in the three-dimensional CT data to a pixel in each two-dimensional view, querying and accumulating the two-dimensional semantic description information corresponding to the pixel, and generating a semantic feature matrix.

For a correspondence relationship between the voxel and the pixel, a mapping function or a lookup table may be established to increase a computing speed.

As mentioned above, according to the voxel driving, each voxel in the three-dimensional CT data is traversed to obtain the semantic feature matrix thereof sequentially, and finally the semantic feature matrix is compressed to obtain the three-dimensional probability map.

In the voxel driving, parallel operations may be performed on each voxel, so that a computing speed is fast, and a real-time performance of the security inspection may be improved.

The pixel driving includes: mapping each pixel in the two-dimensional view to a straight line in the three-dimensional CT data, traversing each pixel in each two-dimensional view or each pixel in the region of interest, propagating the two-dimensional semantic description information corresponding to the pixel into the three-dimensional space along the straight line, and generating a semantic feature matrix. The region of interest is given by the set of two-dimensional semantic descriptions. The correspondence relationship between the voxel and the pixel may also be obtained through a mapping function or a lookup table.

As mentioned above, according to the pixel driving, for each pixel in the plurality of two-dimensional views, the semantic feature matrix thereof is obtained sequentially, and finally the semantic feature matrix is compressed to obtain the three-dimensional probability map.

In the pixel driving, it is also possible to perform parallel operations on pixels, which is also helpful to increase the computing speed and improve the real-time performance of the security inspection.

According to the above description of voxel driving and pixel driving, the semantic feature matrix is generated from the two-dimensional semantic description information according to a spatial correspondence thereof, and it is a matrix obtained through digitization and intensification based on the two-dimensional semantic description information. For example, for the category information in the set of two-dimensional semantic descriptions, the semantic feature matrix may be obtained separately according to the category of each target object. For example, it may be assumed that the corresponding value in the semantic feature matrix is 1 when the target object belongs to the category, and the corresponding value in the semantic feature matrix is 0 when the target object does not belong to the category. In addition, for other semantic information in the set of two-dimensional semantic descriptions, the semantic feature matrix may also be obtained in a similar way.

Typical methods for compressing the semantic feature matrix include weighted average, principal component analysis, etc. In this case, the input is the semantic feature matrix, and the output is the probability map.

As an example, assuming there are two two-dimensional views and two sets of two-dimensional semantic descriptions, and the semantic information on a pixel (or region of interest or two-dimensional image) is numerically represented as 1 or 0, then the two sets of two-dimensional semantic descriptions may be mapped to the three-dimensional space by using a back-projection method, so as to generate the semantic feature matrix corresponding to the three-dimensional space. The values in the matrix are vectors composed of 0 or 1. A probability map value of the voxel in the corresponding three-dimensional space may be calculated using a weighted average method. For example, if the semantic feature matrix value of a voxel is v=[0,1], the probability map value of the voxel is 0.5 in a case that the weights are the same. When compressing the semantic feature matrix corresponding to all target object categories, the dimension of the output probability map value is determined by the number of target object categories. The method of obtaining the probability map value explained here is just an example, and the probability map value may also be obtained in other ways. For example, the weights may be different, and the semantic feature matrix values may be weighted with different weights to obtain the probability map value.

As another example, one or more vectors in the three-dimensional semantic feature matrix may be used as input variable(s) in a principal component analysis. A principal component analysis may be performed on such input variable to obtain an output variable as a principal component. The output variable may be normalized as a probability map value for the corresponding voxel.

By using the above-mentioned calculation method, it may not only ensure the real-time performance of the calculation, but also effectively integrate the two-dimensional recognition results to improve the final recognition effect.

In step S32, a feature extraction is performed on the three-dimensional probability map to obtain the three-dimensional recognition result of the at least one target object.

For example, for the three-dimensional probability map, the feature extraction is performed using at least one or a combination of an image processing method, a classic machine learning method, or a deep learning method, so as to obtain a set of three-dimensional image semantic descriptions as the three-dimensional recognition result.

As an example, the three-dimensional probability map is input into a deep learning model, and a three-dimensional recognition result such as a confidence level and a three-dimensional bounding box is output. The deep learning model used here may adopt technologies such as a classification neural network or an object detection network with a few layers. By using such technologies, the information content contained in the original three-dimensional CT data may be effectively simplified and abstracted through the above steps, and is closer to an ultimate goal of identifying prohibited items, then it is possible to quickly and accurately extract the set of three-dimensional semantic descriptions using a simple feature extraction method.

Here, the set of three-dimensional image semantic descriptions includes a category information and/or a confidence level, in units of one or more of voxels, three-dimensional volumes of interest, or three-dimensional CT images. Alternatively, the set of three-dimensional image semantic descriptions includes at least one of a category information, a position information of the at least one target object, or a confidence level, in units of three-dimensional volumes of interest and/or three-dimensional CT images. The position information of the at least one target object in the three-dimensional CT image may include a three-dimensional bounding box.

In other words, the set of three-dimensional image semantic descriptions includes at least one selected from: a category information of a target object to which a voxel belongs, a confidence level, etc.; a category information of at least one target object contained in a three-dimensional volume of interest (VOI), a position information of the at least one target object, a confidence level, etc.; a category information of at least one target object contained in a three-dimensional CT image, a position information of the at least one target object, a confidence level, etc. The at least one information may be information contained in one group, or may be information contained in different groups.

Since the set of three-dimensional image semantic descriptions is generated from the three-dimensional probability map generated based on the set of two-dimensional semantic descriptions, there is consistency or mutual conversion between types of the semantic information contained in the set of three-dimensional image semantic descriptions and types of the semantic information contained in the set of two-dimensional semantic descriptions.

In the present disclosure, through the above-mentioned dimension increase, a dimension increase is performed on the set of two-dimensional semantic descriptions to obtain a three-dimensional recognition result of the at least one target object, so that the problem of significantly reduced information content caused when the two-dimensional identification is performed only by dimension reduction is solved. Then, a loss of information content may be reduced while the two-dimensional identification is used, and both the real-time performance and the accuracy of the security inspection may be considered.

As another example of step S32, for example, an image processing method may be used. As shown in FIG. 4, step S32 may include steps S321 to S323.

In step S321, a binarization is performed on the three-dimensional probability map to obtain a three-dimensional binary map.

In step S322, a connected component analysis is performed on the three-dimensional binary image to obtain at least one connected component.

As an example, a connected component labeling may be performed on the three-dimensional binary image, and a mask operation may be performed on each labeled region to obtain at least one connected component.

In step S323, a set of three-dimensional image semantic descriptions is generated for the at least one connected component.

Then, the set of three-dimensional image semantic descriptions may include a three-dimensional bounding box. The three-dimensional bounding box may give a spatial boundary of the target object in the three-dimensional image, and a position, a range, a posture, a shape, etc. of the target object may be shown more intuitively, which is helpful for security personnel to accurately determine whether the target object is a dangerous item.

As an example, all probability values for each connected component may be extracted, a principal component analysis may be performed to obtain an analysis set, and the analysis set may be used as a valid voxel volume of object. A set of three-dimensional image semantic descriptions may be statistically generated for the valid voxel volume. In this way, the accuracy of three-dimensional identification may be further improved.

In the first embodiment, a dimension reduction is performed on three-dimensional CT data to generate a plurality of two-dimensional dimension-reduced views, a target recognition is performed using a plurality of two-dimensional views including the plurality of two-dimensional dimension-reduced views to obtain a set of two-dimensional semantic descriptions, and then a dimension increase is performed on the set of two-dimensional semantic descriptions to obtain a three-dimensional recognition result. That is, the dimensions are firstly reduced from three dimensions to two dimensions for identification and then increased to generate a three-dimensional result. In this way, it is possible to effectively recognize a target object with complex material composition and physical properties and having shape features through a two-dimensional identification, and also possible to effectively integrate two-dimensional recognition results to provide a three-dimensional recognition result with a rich information content. In this way, a recognition effect of the target object may be improved, and requirements for real-time performance of a security inspection may be met.

### <Second Embodiment>

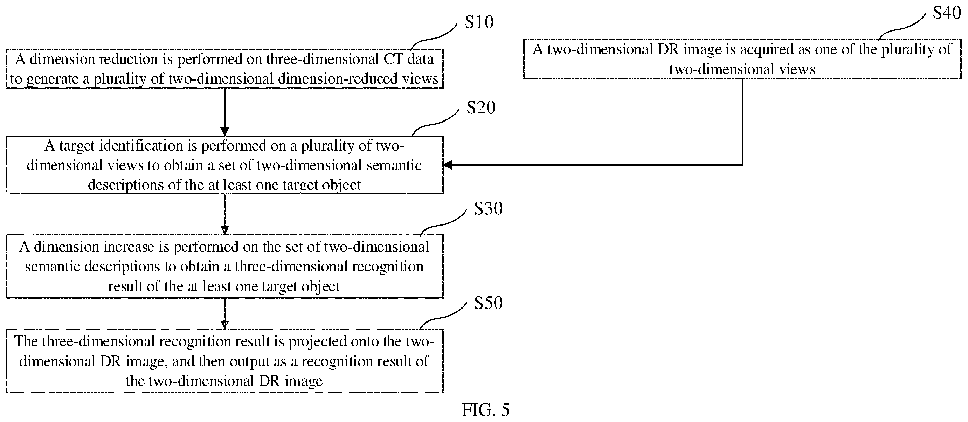

As the second embodiment of the present disclosure, another method of identifying at least one target object for a security inspection CT is provided. FIG. 5 shows a flowchart of the method of identifying the at least one target object for the security inspection CT according to the first embodiment.

The second embodiment differs from the first embodiment in that: in the second embodiment, not only the two-dimensional dimension-reduced image generated from the three-dimensional CT data is used, but also two-dimensional digital radiography (DR) data is used for identifying the at least one target object.

For example, in step S20, the plurality of two-dimensional views further include a two-dimensional DR image, and the target identification is also performed on the two-dimensional DR image to obtain a set of two-dimensional semantic descriptions of the at least one target object. Here, the two-dimensional DR image is acquired by a DR imaging device provided independently from the security CT device. The two-dimensional DR image is an image of the same security inspection object as the three-dimensional CT data.

In the second embodiment, as shown in FIG. 5, step S40 may be performed before step S20. In step S40, a two-dimensional DR image is acquired from the DR imaging device and is used as one of the plurality of two-dimensional views. Step S40 may be performed in parallel with step S10.

In this case, in step S30, the dimension increase is performed not only on the set of two-dimensional semantic descriptions of the two-dimensional dimension-reduced image, but also on the set of two-dimensional semantic descriptions of the two-dimensional DR image, so as to obtain a three-dimensional recognition result.

The two-dimensional DR image is a two-dimensional image with different principles and properties from the two-dimensional dimension-reduced image generated by performing a dimension reduction on the three-dimensional CT data. By using such two-dimensional DR image for the target identification, it is possible to increase the information content used for identification, and the accuracy of identification may be improved.

In the second embodiment, as shown in FIG. 5, step S50 may be optionally performed after step S30. In step S50, the three-dimensional recognition result generated in step S30 is projected onto the two-dimensional DR image, and then a recognition result of the two-dimensional DR image is output.

Due to work habits and requirements, some security personnel want to confirm the recognition result in the two-dimensional DR image. However, if the recognition result of the two-dimensional DR image is used directly, when the target object in the DR image is seriously blocked or has a special placement posture, the information of the target object may be incomplete, which affects the recognition accuracy. A three-dimensional recognition result is obtained by effectively integrating the semantic information of several two-dimensional views, so that it is more accurate and reliable. Therefore, by projecting the three-dimensional recognition result onto the two-dimensional DR image as the recognition result for output, the accuracy of the recognition result may be improved while meeting the work requirements of security personnel to confirm the recognition result through the two-dimensional DR image.

In addition, the result of step S30 and the result of step S50 may be output simultaneously.

In this case, the three-dimensional recognition result and the recognition result in the two-dimensional DR image may be compared and verified with each other, which is helpful to the security personnel to more accurately determine whether the target object is a dangerous item.

### <Third Embodiment>

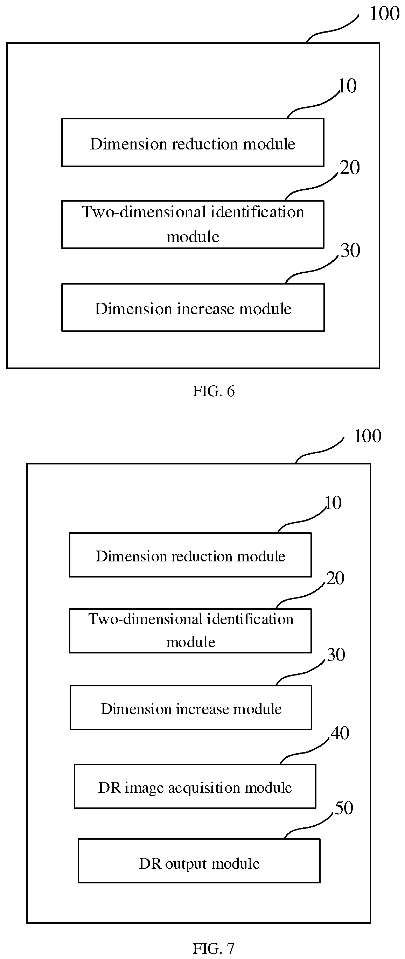

As the third embodiment of the present disclosure, an apparatus of identifying at least one target object for a security inspection CT is provided. FIG. 6 shows a schematic diagram of the apparatus of identifying the at least one target object for the security inspection CT according to the first embodiment.

As shown in FIG. 6, an apparatus 100 of identifying at least one target object for a security inspection CT in this embodiment includes a dimension reduction module 10, a two-dimensional identification module 20, and a dimension increase module 30.

The dimension reduction module 10 is used to perform a dimension reduction on three-dimensional CT data to generate a plurality of two-dimensional dimension-reduced views. That is, the dimension reduction module 10 may perform step S10 in the first and second embodiments described above.

The two-dimensional identification module 20 is used to perform a target identification on a plurality of two-dimensional views to obtain a set of two-dimensional semantic descriptions of the at least one target object. Here, the plurality of two-dimensional views include the plurality of two-dimensional dimension-reduced views. That is, the two-dimensional identification module 20 may perform step S20 in the first and second embodiments described above.

The dimension increase module 30 is used to perform a dimension increase on the set of two-dimensional semantic descriptions to obtain a three-dimensional recognition result of the at least one target object. That is, the dimension increase module 30 may perform step S30 in the first and second embodiments described above.

For the processing of the dimension reduction module 10, the two-dimensional identification module 20 and the dimension increase module 30, reference may be made to the first and second embodiments described above, and details will not be repeated here.

In addition, as shown in FIG. 7, the apparatus 100 of identifying the at least one target object for the security inspection CT may further include a DR image acquisition module 40. The DR image acquisition module 40 is used to acquire a two-dimensional DR image from a DR imaging device as one of the plurality of two-dimensional views. That is, the DR image acquisition module 40 may perform step S40 in the second embodiment.

The apparatus 100 of identifying the at least one target object for the security inspection CT may further include a DR output module 50. The DR output module 50 is used to project the three-dimensional recognition result generated by the dimension increase module 30 to the two-dimensional DR image, and then a recognition result of the two-dimensional DR image is output. That is, the DR output module 50 may perform step S50 in the second embodiment.

In the present disclosure, the apparatus 100 of identifying the at least one target object for the security inspection CT may be implemented in a form of hardware, or implemented as a software module running on one or more processors, or implemented in a combination thereof.

For example, the apparatus 100 of identifying the at least one target object for the security inspection CT may be implemented in a combination of software and hardware by any suitable electronic device such as a desktop computer, a tablet computer, a smart phone, a server, etc. provided with a processor. For example, the apparatus 100 of identifying the at least one target object for the security inspection CT may be a control computer of a security inspection CT system, or a server connected to a security inspection CT scanning device in the security inspection CT system, etc.

In addition, the apparatus 100 of identifying the at least one target object for the security inspection CT may be implemented as a software module on any suitable electronic device such as a desktop computer, a tablet computer, a smart phone, a server, etc., e.g., a software module installed on a control computer of the security inspection CT system, or a software module installed on a server connected to the security inspection CT scanning device in the security inspection CT system.

The processor of the apparatus 100 of identifying the at least one target object for the security inspection CT may perform the method of identifying the at least one target object for the security inspection CT described above.

The apparatus 100 of identifying the at least one target object for the security inspection CT may further include a memory (not shown), a communication module (not shown), and the like.

The memory of the apparatus 100 of identifying the at least one target object for the security inspection CT may store steps for executing the method of identifying the at least one target object for the security inspection CT described above, and data related to target identification for the security inspection CT, etc. The memory may be, for example, ROM (read Only Memory image), RAM (Random Access Memory), etc. The memory has a storage space for program codes for executing any step in the above-mentioned method of identifying the at least one target object for the security inspection CT. When these program codes are read and executed by the processor, the above-mentioned method of identifying the at least one target object for the security inspection CT may be performed. These program codes may be read from or written into one or more computer program products. These computer program products include program code carriers such as hard disks, compact disks (CDs), memory cards or floppy disks. Such computer program products are generally portable or fixed storage units. The program codes for performing any of the steps in the above-mentioned methods may also be downloaded through a network. The program codes may be, for example, compressed in a suitable form.

The communication module in the apparatus 100 of identifying the at least one target object for the security inspection CT may support an establishment of a direct (e.g., wired) communication channel or a wireless communication channel between the apparatus 100 of identifying the at least one target object for the security inspection CT and an external electronic device, and may perform communication via the established communication channel. For example, the communication module may receive the three-dimensional CT data, etc. from the CT scanning device via the network.

In addition, the apparatus 100 of identifying the at least one target object for the security inspection CT may further include an output part such as a display, a microphone, and a speaker, etc. to output the target recognition result.

The above-mentioned apparatus 100 of identifying the at least one target object for the security inspection CT may be implemented to achieve the same effects as the first and second embodiments described above.

## Claims

1. A method of identifying at least one target object for a security inspection computed tomography, CT, comprising:
performing (S10) a dimension reduction on three-dimensional CT data to generate a plurality of two-dimensional dimension-reduced views;
performing (S20) a target identification on a plurality of two-dimensional views to obtain a set of two-dimensional semantic descriptions of the at least one target object, wherein the plurality of two-dimensional views comprise the plurality of two-dimensional dimension-reduced views; and
performing (S30) a dimension increase on the set of two-dimensional semantic descriptions to obtain a three-dimensional recognition result of the at least one target object,
**characterised in that** the performing (S30) a dimension increase on the set of two-dimensional semantic descriptions to obtain a three-dimensional recognition result of the at least one target object comprises:
mapping (S31) the set of two-dimensional semantic descriptions to a three-dimensional space by using a back-projection method, so as to obtain a three-dimensional probability map; and
performing (S32) a feature extraction on the three-dimensional probability map to obtain the three-dimensional recognition result of the at least one target object.

2. The method of identifying the at least one target object for the security inspection CT according to claim 1, wherein the mapping (S31) the set of two-dimensional semantic descriptions to a three-dimensional space by using a back-projection method so as to obtain a three-dimensional probability map comprises:
mapping the set of two-dimensional semantic descriptions to the three-dimensional space by voxel driving or pixel driving so as to obtain a semantic feature matrix, and compressing the semantic feature matrix into the three-dimensional probability map,
wherein the voxel driving comprises:
mapping each voxel in the three-dimensional CT data to a pixel in each two-dimensional view, querying and accumulating a two-dimensional semantic description information corresponding to the pixel, and generating the semantic feature matrix; and
wherein the pixel driving comprises:
mapping each pixel in the two-dimensional view to a straight line in the three-dimensional CT data, traversing each pixel in each two-dimensional view or each pixel in a region of interest, propagating a two-dimensional semantic description information corresponding to the pixel into the three-dimensional space along the straight line, and generating the semantic feature matrix, wherein the region of interest is given by the set of two-dimensional semantic descriptions.

3. The method of identifying the at least one target object for the security inspection CT according to claim 2,
wherein in the voxel driving or the pixel driving, a correspondence relationship between the voxel and the pixel is obtained by a mapping function or a lookup table.

4. The method of identifying the at least one target object for the security inspection CT according to claim 1, wherein the performing (S32) a feature extraction on the three-dimensional probability map to obtain the three-dimensional recognition result of the at least one target object comprises:
performing the feature extraction on the three-dimensional probability map by using at least one or a combination of an image processing method or a machine learning method, so as to obtain a set of three-dimensional image semantic descriptions as the three-dimensional recognition result.

5. The method of identifying the at least one target object for the security inspection CT according to claim 4, wherein
a binarization (S321) is performed on the three-dimensional probability map to obtain a three-dimensional binary map;
a connected component analysis (S322) is performed on the three-dimensional binary map to obtain at least one connected component; and
the set of three-dimensional image semantic descriptions is generated (S323) for the at least one connected component,
wherein performing the connected component analysis (S322) comprises:
performing a connected component labeling on the three-dimensional binary map, and performing a mask operation on each labeled region to obtain the at least one connected component.

6. The method of identifying the at least one target object for the security inspection CT according to claim 5, wherein the generating (S323) the set of three-dimensional image semantic descriptions for the at least one connected component comprises:
extracting all probability values for each connected component, performing a principal component analysis to obtain an analysis set, and statistically generating a three-dimensional image semantic description by using the analysis set.

7. The method of identifying the at least one target object for the security inspection CT according to claim 4, wherein the set of three-dimensional image semantic descriptions comprises a category information and/or a confidence level, in units of one or more of voxels, three-dimensional volumes of interest, or three-dimensional CT images; or the set of three-dimensional image semantic descriptions comprises at least one of a category information, a position information of the at least one target object, or a confidence level, in units of three-dimensional volumes of interest and/or three-dimensional CT images,
wherein the position information comprises a three-dimensional bounding box.

8. The method of identifying the at least one target object for the security inspection CT according to claim 1, wherein the set of two-dimensional semantic descriptions comprises a category information and/or a confidence level, in units of one or more of pixels, regions of interest, or two-dimensional images; or
the set of two-dimensional semantic descriptions comprises at least one of a category information, a confidence level, or a position information of the at least one target object, in units of regions of interest and/or two-dimensional images.

9. The method of identifying the at least one target object for the security inspection CT according to claim 1, wherein performing (S20) the target identification on each of the plurality of two-dimensional views comprises:
performing the target identification for two-dimensional images by using at least one or a combination of an image processing method or a machine learning method.

10. The method of identifying the at least one target object for the security inspection CT according to claim 1, wherein the performing (S10) a dimension reduction on three-dimensional CT data to generate a plurality of two-dimensional dimension-reduced views comprises:
setting (S11) a plurality of directions for the three-dimensional CT data; and
projecting or rendering (S12) according to the plurality of directions.

11. The method of identifying the at least one target object for the security inspection CT according to claim 10, wherein the plurality of directions are arbitrary directions and are not limited to a direction orthogonal to a traveling direction of an object during a detection process.

12. The method of identifying the at least one target object for the security inspection CT according to any one of claims 1 to 11, wherein the plurality of two-dimensional views further comprise a two-dimensional digital radiography, DR, image, and the two-dimensional DR image is acquired by a DR imaging device,
wherein the three-dimensional recognition result is projected (S50) onto the two-dimensional DR image and output as a recognition result of the two-dimensional DR image.

13. An apparatus (100) of identifying at least one target object for a security inspection computed tomography, CT, comprising:
a dimension reduction module (10) configured to perform a dimension reduction on three-dimensional CT data to generate a plurality of two-dimensional dimension-reduced views;
a two-dimensional identification module (20) configured to perform a target identification on a plurality of two-dimensional views to obtain a set of two-dimensional semantic descriptions of the at least one target object, wherein the plurality of two-dimensional views comprise the plurality of two-dimensional dimension-reduced views; and
a dimension increase module (30) configured to perform a dimension increase on the set of two-dimensional semantic descriptions to obtain a three-dimensional recognition result of the at least one target object,
**characterised in that** the dimension increase module (30) is further configured to:
map the set of two-dimensional semantic descriptions to a three-dimensional space by using a back-projection method, so as to obtain a three-dimensional probability map; and
perform a feature extraction on the three-dimensional probability map to obtain the three-dimensional recognition result of the at least one target object.

14. A machine-readable storage medium having a program thereon, wherein the program, when executed by a processor, causes a computer to:
perform a dimension reduction on three-dimensional computed tomography, CT, data to generate a plurality of two-dimensional dimension-reduced views;
perform a target identification on a plurality of two-dimensional views to obtain a set of two-dimensional semantic descriptions of the at least one target object, wherein the plurality of two-dimensional views comprise the plurality of two-dimensional dimension-reduced views; and
perform a dimension increase on the set of two-dimensional semantic descriptions to obtain a three-dimensional recognition result of the at least one target object,
**characterised in that** the program, when executed by the processor, further causes the computer to:
map the set of two-dimensional semantic descriptions to a three-dimensional space by using a back-projection method, so as to obtain a three-dimensional probability map; and
perform a feature extraction on the three-dimensional probability map to obtain the three-dimensional recognition result of the at least one target object.

## Patentansprüche

1. Verfahren zum Identifizieren mindestens eines Zielobjekts für eine Sicherheitsinspektions-Computertomographie (CT), umfassend:
Durchführen (S10) einer Dimensionsverkleinerung an dreidimensionalen CT-Daten, um mehrere zweidimensionale dimensionsverkleinerte Ansichten zu generieren,
Durchführen (S20) einer Zielidentifikation an mehreren zweidimensionalen Ansichten, um einen Satz von zweidimensionalen semantischen Beschreibungen des mindestens einen Zielobjekts zu erhalten, wobei die mehreren zweidimensionalen Ansichten die mehreren zweidimensionalen dimensionsverkleinerten Ansichten umfassen, und
Durchführen (S30) einer Dimensionsvergrößerung an dem Satz von zweidimensionalen semantischen Beschreibungen, um ein dreidimensionales Erkennungsergebnis des mindestens einen Zielobjekts zu erhalten,
**dadurch gekennzeichnet, dass** das Durchführen (S30) einer Dimensionsvergrößerung an dem Satz von zweidimensionalen semantischen Beschreibungen, um ein dreidimensionales Erkennungsergebnis des mindestens einen Zielobjekts zu erhalten, umfasst:
Abbilden (S31) des Satzes von zweidimensionalen semantischen Beschreibungen auf einen dreidimensionalen Raum unter Verwendung eines Rückprojektionsverfahrens, um eine dreidimensionale Wahrscheinlichkeitskarte zu erhalten, und
Durchführen (S32) einer Merkmalsextraktion an der dreidimensionalen Wahrscheinlichkeitskarte, um das dreidimensionale Erkennungsergebnis des mindestens einen Zielobjekts zu erhalten.

2. Verfahren zum Identifizieren des mindestens einen Zielobjekts für die Sicherheitsinspektions-CT nach Anspruch 1, wobei das Abbilden (S31) des Satzes von zweidimensionalen semantischen Beschreibungen auf einen dreidimensionalen Raum unter Verwendung eines Rückprojektionsverfahrens, um eine dreidimensionale Wahrscheinlichkeitskarte zu erhalten, umfasst:
Abbilden des Satzes von zweidimensionalen semantischen Beschreibungen auf den dreidimensionalen Raum durch Voxel-Ansteuern oder Pixel-Ansteuern, um eine semantische Merkmalsmatrix zu erhalten, und Komprimieren der semantischen Merkmalsmatrix zu der dreidimensionalen Wahrscheinlichkeitskarte,
wobei das Voxel-Ansteuern umfasst:
Abbilden jedes Voxels in den dreidimensionalen CT-Daten auf ein Pixel in jeder zweidimensionalen Ansicht, Abfragen und Akkumulieren einer zweidimensionalen semantischen Beschreibungsinformation, die dem Pixel entspricht, und Generieren der semantischen Merkmalsmatrix, und
wobei das Pixel-Ansteuern umfasst:
Abbilden jedes Pixels in der zweidimensionalen Ansicht auf eine gerade Linie in den dreidimensionalen CT-Daten, Traversieren jedes Pixels in jeder zweidimensionalen Ansicht oder jedes Pixels in einer interessierenden Region, Ausbreiten einer zweidimensionalen semantischen Beschreibungsinformation, die dem Pixel entspricht, in den dreidimensionalen Raum entlang der geraden Linie, und Generieren der semantischen Merkmalsmatrix, wobei die interessierende Region durch den Satz von zweidimensionalen semantischen Beschreibungen gegeben ist.

3. Verfahren zum Identifizieren des mindestens einen Zielobjekts für die Sicherheitsinspektions-CT nach Anspruch 2,
wobei bei dem Voxel-Ansteuern oder Pixel-Ansteuern eine Entsprechungsbeziehung zwischen dem Voxel und dem Pixel durch eine Abbildungsfunktion oder eine Nachschlagetabelle erhalten wird.

4. Verfahren zum Identifizieren des mindestens einen Zielobjekts für die Sicherheitsinspektions-CT nach Anspruch 1, wobei das Durchführen (S32) einer Merkmalsextraktion an der dreidimensionalen Wahrscheinlichkeitskarte, um das dreidimensionale Erkennungsergebnis des mindestens einen Zielobjekts zu erhalten, umfasst:
Durchführen der Merkmalsextraktion an der dreidimensionalen Wahrscheinlichkeitskarte unter Verwendung mindestens eines von einem, oder einer Kombination aus einem, Bildverarbeitungsverfahren und einem Maschinenlernverfahren, um einen Satz von dreidimensionalen semantischen Bildbeschreibungen als das dreidimensionale Erkennungsergebnis zu erhalten.

5. Verfahren zum Identifizieren des mindestens einen Zielobjekts für die Sicherheitsinspektions-CT nach Anspruch 4, wobei
eine Binarisierung (S321) an der dreidimensionalen Wahrscheinlichkeitskarte durchgeführt wird, um eine dreidimensionale binären Karte zu erhalten,
eine Analyse (S322) verbundener Komponenten an der dreidimensionalen binären Karte durchgeführt wird, um mindestens eine verbundene Komponente zu erhalten, und
der Satz von dreidimensionalen semantischen Bildbeschreibungen für die mindestens eine verbundene Komponente generiert wird (S323),
wobei das Durchführen der Analyse (S322) der verbundenen Komponenten umfasst:
Durchführen einer Markierung verbundener Komponenten auf der dreidimensionalen binären Karte und Durchführen einer Maskenoperation an jeder markierten Region, um mindestens eine verbundene Komponente zu erhalten.

6. Verfahren zum Identifizieren des mindestens einen Zielobjekts für die Sicherheitsinspektions-CT nach Anspruch 5, wobei das Generieren (S323) des Satzes von dreidimensionalen semantischen Bildbeschreibungen für die mindestens eine verbundene Komponente umfasst:
Extrahieren aller Wahrscheinlichkeitswerte für jede verbundene Komponente, Durchführen einer Hauptkomponentenanalyse, um einen Analysesatz zu erhalten, und statistisches Generieren einer dreidimensionalen semantischen Bildbeschreibung unter Verwendung des Analysesatzes.

7. Verfahren zum Identifizieren des mindestens einen Zielobjekts für die Sicherheitsinspektions-CT nach Anspruch 4, wobei der Satz von dreidimensionalen semantischen Bildbeschreibungen eine Kategorieinformation und/oder einen Konfidenzgrad in Einheiten von einem oder mehreren von Voxeln, dreidimensionalen interessierenden Volumen und dreidimensionalen CT-Bildern umfasst, oder der Satz von dreidimensionalen semantischen Bildbeschreibungen mindestens eines von einer Kategorieinformation, einer Positionsinformation des mindestens einen Zielobjekts und einem Konfidenzgrad in Einheiten von dreidimensionalen interessierenden Volumen und/oder dreidimensionalen CT-Bildern umfasst,
wobei die Positionsinformation einen dreidimensionalen Begrenzungsrahmen umfasst.

8. Verfahren zum Identifizieren des mindestens einen Zielobjekts für die Sicherheitsinspektions-CT nach Anspruch 1, wobei der Satz von zweidimensionalen semantischen Beschreibungen eine Kategorieinformation und/oder einen Konfidenzgrad in Einheiten von einem oder mehreren von Pixeln, interessierenden Regionen oder zweidimensionalen Bildern umfasst, oder
der Satz von zweidimensionalen semantischen Beschreibungen mindestens eines von einer Kategorieinformation, einem Konfidenzgrad oder einer Positionsinformation des mindestens einen Zielobjekts in Einheiten von interessierenden Regionen und/oder zweidimensionalen Bildern umfasst.

9. Verfahren zum Identifizieren des mindestens einen Zielobjekts für die Sicherheitsinspektions-CT nach Anspruch 1, wobei das Durchführen (S20) der Zielidentifikation an jeder der mehreren zweidimensionalen Ansichten umfasst:
Durchführen der Zielidentifikation für zweidimensionale Bilder unter Verwendung mindestens eines von einem, oder einer Kombination aus einem, Bildverarbeitungsverfahren und einem Maschinenlernverfahren.

10. Verfahren zum Identifizieren des mindestens einen Zielobjekts für die Sicherheitsinspektions-CT nach Anspruch 1, wobei das Durchführen (S10) einer Dimensionsverkleinerung an dreidimensionalen CT-Daten, um mehrere zweidimensionale dimensionsverkleinerte Ansichten zu generieren, umfasst:
Einstellen (S11) mehrerer Richtungen für die dreidimensionalen CT-Daten, und
Projizieren oder Rendern (S12) gemäß den mehreren Richtungen.

11. Verfahren zum Identifizieren des mindestens einen Zielobjekts für die Sicherheitsinspektions-CT nach Anspruch 10, wobei die mehreren Richtungen beliebige Richtungen sind und nicht auf eine Richtung orthogonal zu einer Bewegungsrichtung eines Objekts während eines Detektionsprozesses beschränkt sind.

12. Verfahren zum Identifizieren des mindestens einen Zielobjekts für die Sicherheitsinspektions-CT gemäß einem der Ansprüche 1 bis 11, wobei die mehreren zweidimensionalen Ansichten des Weiteren ein zweidimensionales Digitalradiographiebild (DR-Bild) umfassen und das zweidimensionale DR-Bild durch eine DR-Bildgebungsvorrichtung aufgenommen wird,
wobei das dreidimensionale Erkennungsergebnis auf das zweidimensionale DR-Bild projiziert wird (S50) und als ein Erkennungsergebnis des zweidimensionalen DR-Bildes ausgegeben wird.

13. Vorrichtung (100) zum Identifizieren mindestens eines Zielobjekts für eine Sicherheitsinspektions-Computertomographie (CT), umfassend:
ein Dimensionsverkleinerungsmodul (10), das dazu eingerichtet ist, eine Dimensionsverkleinerung an dreidimensionalen CT-Daten durchzuführen, um mehrere zweidimensionale dimensionsverkleinerte Ansichten zu generieren,
ein zweidimensionales Identifikationsmodul (20), das dazu eingerichtet ist, eine Zielidentifikation an mehreren zweidimensionalen Ansichten durchzuführen, um einen Satz von zweidimensionalen semantischen Beschreibungen des mindestens einen Zielobjekts zu erhalten, wobei die mehreren zweidimensionalen Ansichten die mehreren zweidimensionalen dimensionsverkleinerten Ansichten umfassen, und
ein Dimensionsvergrößerungsmodul (30), das dazu eingerichtet ist, eine Dimensionsvergrößerung an dem Satz von zweidimensionalen semantischen Beschreibungen durchzuführen, um ein dreidimensionales Erkennungsergebnis des mindestens einen Zielobjekts zu erhalten,
**dadurch gekennzeichnet, dass** das Dimensionsvergrößerungsmodul (30) des Weiteren eingerichtet ist zum:
Abbilden des Satzes von zweidimensionalen semantischen Beschreibungen auf einen dreidimensionalen Raum unter Verwendung eines Rückprojektionsverfahrens, um eine dreidimensionale Wahrscheinlichkeitskarte zu erhalten, und
Durchführen einer Merkmalsextraktion an der dreidimensionalen Wahrscheinlichkeitskarte, um das dreidimensionale Erkennungsergebnis des mindestens einen Zielobjekts zu erhalten.

14. Maschinenlesbares Speichermedium, auf dem sich ein Programm befindet, wobei das Programm, wenn es durch einen Prozessor ausgeführt wird, einen Computer veranlasst zum:
Durchführen einer Dimensionsverkleinerung an dreidimensionalen Computertomographie-Daten (CT-Daten), um mehrere zweidimensionale dimensionsverkleinerte Ansichten zu generieren,
Durchführen einer Zielidentifikation an mehreren zweidimensionalen Ansichten, um einen Satz von zweidimensionalen semantischen Beschreibungen des mindestens einen Zielobjekts zu erhalten, wobei die mehreren zweidimensionalen Ansichten die mehreren zweidimensionalen dimensionsverkleinerten Ansichten umfassen, und
Durchführen einer Dimensionsvergrößerung an dem Satz von zweidimensionalen semantischen Beschreibungen, um ein dreidimensionales Erkennungsergebnis des mindestens einen Zielobjekts zu erhalten,
**dadurch gekennzeichnet, dass** das Programm, wenn es durch den Prozessor ausgeführt wird, den Computer des Weiteren veranlasst zum:
Abbilden des Satzes von zweidimensionalen semantischen Beschreibungen auf einen dreidimensionalen Raum unter Verwendung eines Rückprojektionsverfahrens, um eine dreidimensionale Wahrscheinlichkeitskarte zu erhalten, und
Durchführen einer Merkmalsextraktion an der dreidimensionalen Wahrscheinlichkeitskarte, um das dreidimensionale Erkennungsergebnis des mindestens einen Zielobjekts zu erhalten.

## Revendications

1. Procédé d'identification d'au moins un objet cible pour une inspection de sécurité par tomodensitométrie, CT, comprenant les étapes suivantes :
réaliser (S10) une réduction de dimension sur des données CT tridimensionnelles pour générer une pluralité de vues bidimensionnelles de dimension réduite ;
réaliser (S20) une identification cible sur une pluralité de vues bidimensionnelles pour obtenir un ensemble de descriptions sémantiques bidimensionnelles de l'au moins un objet cible, dans lequel la pluralité de vues bidimensionnelles comprend la pluralité de vues bidimensionnelles à dimension réduite ; et
réaliser (S30) une augmentation de dimension sur l'ensemble de descriptions sémantiques bidimensionnelles pour obtenir un résultat de reconnaissance tridimensionnelle de l'au moins un objet cible,
**caractérisé en ce que**
la réalisation (S30) d'une augmentation de dimension sur l'ensemble de descriptions sémantiques bidimensionnelles pour obtenir un résultat de reconnaissance tridimensionnelle de l'au moins un objet cible comprend ce qui qui suit :
mettre en correspondance (S31) l'ensemble de descriptions sémantiques bidimensionnelles avec un espace tridimensionnel en utilisant un procédé de rétroprojection pour obtenir une carte de probabilité tridimensionnelle ; et
réaliser (S32) une extraction de caractéristiques sur la carte de probabilité tridimensionnelle pour obtenir le résultat de reconnaissance tridimensionnelle de l'au moins un objet cible.

2. Procédé d'identification d'au moins un objet cible pour une inspection de sécurité par tomodensitométrie, CT, selon la revendication 1, dans lequel la mise en correspondance (S31) de l'ensemble de descriptions sémantiques bidimensionnelles avec un espace tridimensionnel en utilisant un procédé de rétroprojection pour obtenir une carte de probabilité tridimensionnelle comprend ce qui suit :
mettre en correspondance l'ensemble de descriptions sémantiques bidimensionnelles avec l'espace tridimensionnel par commande de voxels ou par commande de pixels pour obtenir une matrice de caractéristiques sémantiques, et compresser la matrice de caractéristiques sémantiques dans la carte de probabilité tridimensionnelle,
dans lequel la commande de voxels comprend ce qui suit :
mettre en correspondance chaque voxel dans les données CT tridimensionnelles à un pixel dans chaque vue bidimensionnelle, interroger et cumuler des informations de description sémantique bidimensionnelle correspondant au pixel, et générer la matrice de caractéristiques sémantiques ; et
dans lequel la commande de pixels comprend ce qui suit :
mettre en correspondance chaque pixel dans la vue bidimensionnelle avec une ligne droite dans les données CT tridimensionnelles, parcourir chaque pixel dans chaque vue bidimensionnelle ou chaque pixel dans une région d'intérêt, propager des informations de description sémantique bidimensionnelle correspondant au pixel dans l'espace tridimensionnel le long de la ligne droite, et générer la matrice de caractéristiques sémantiques, dans lequel la région d'intérêt est donnée par l'ensemble de descriptions sémantiques bidimensionnelles.

3. Procédé d'identification d'au moins un objet cible pour une inspection de sécurité par tomodensitométrie, CT, selon la revendication 2,
dans lequel, dans la commande de voxels ou la commande de pixels, une relation de correspondance entre le voxel et le pixel est obtenue par une fonction de mappage ou une table de consultation.

4. Procédé d'identification d'au moins un objet cible pour une inspection de sécurité par tomodensitométrie, CT, selon la revendication 1, dans lequel la réalisation (S32) d'une extraction de caractéristiques sur la carte de probabilité tridimensionnelle pour obtenir le résultat de reconnaissance tridimensionnelle de l'au moins un objet cible comprend :
réaliser l'extraction de caractéristiques sur la carte de probabilité tridimensionnelle en utilisant au moins un procédé de traitement d'image ou un procédé d'apprentissage machine ou une combinaison de ceux-ci pour obtenir un ensemble de descriptions sémantiques d'images tridimensionnelles comme résultat de reconnaissance tridimensionnelle.

5. Procédé d'identification d'au moins un objet cible pour une inspection de sécurité par tomodensitométrie, CT, selon la revendication 4, dans lequel
une binarisation (S321) est réalisée sur la carte de probabilité tridimensionnelle pour obtenir une carte binaire tridimensionnelle ;
une analyse de composant connecté (S322) est réalisée sur la carte binaire tridimensionnelle pour obtenir au moins un composant connecté ; et
l'ensemble de descriptions sémantiques d'images tridimensionnelles est généré (S323) pour l'au moins un composant connecté,
dans lequel la réalisation de l'analyse de composant connecté (S322) comprend:
réaliser un étiquetage de composant connecté sur la carte binaire tridimensionnelle, et réaliser une opération de masque sur chaque région étiquetée pour obtenir l'au moins un composant connecté.

6. Procédé d'identification d'au moins un objet cible pour une inspection de sécurité par tomodensitométrie, CT, selon la revendication 5, dans lequel la génération (S323) de l'ensemble de descriptions sémantiques d'images tridimensionnelles pour l'au moins un composant connecté comprend:
extraire toutes les valeurs de probabilité pour chaque composant connecté, réaliser une analyse de composant principal pour obtenir un ensemble d'analyse, et générer statistiquement une description sémantique d'image tridimensionnelle en utilisant l'ensemble d'analyse.

7. Procédé d'identification d'au moins un objet cible pour une inspection de sécurité par tomodensitométrie, CT, selon la revendication 4, dans lequel l'ensemble de descriptions sémantiques d'images tridimensionnelles comprend des informations de catégorie et/ou un niveau de confiance en unités d'un ou plusieurs voxels, de volumes d'intérêt tridimensionnels et/ou d'images CT tridimensionnelles ; ou l'ensemble de descriptions sémantiques d'images tridimensionnelles comprend au moins l'un parmi des informations de catégorie, des informations de position de l'au moins un objet cible, ou un niveau de confiance en unités de volumes d'intérêt tridimensionnels et/ou d'images CT tridimensionnelles,
dans lequel les informations de position comprennent une boîte englobante tridimensionnelle.

8. Procédé d'identification d'au moins un objet cible pour une inspection de sécurité par tomodensitométrie, CT, selon la revendication 1, dans lequel l'ensemble de descriptions sémantiques bidimensionnelles comprend des informations de catégorie et/ou un niveau de confiance, en unités d'un ou plusieurs pixels, de régions d'intérêt, ou d'images bidimensionnelles ; ou
l'ensemble de descriptions sémantiques bidimensionnelles comprend des informations de catégorie, un niveau de confiance, ou des informations de position de l'au moins un objet cible en unités de régions d'intérêt et/ou d'images bidimensionnelles.

9. Procédé d'identification d'au moins un objet cible pour une inspection de sécurité par tomodensitométrie, CT, selon la revendication 1, dans lequel la réalisation (S20) de l'identification de cible sur chacune de la pluralité de vues bidimensionnelles comprend ce qui suit :
réaliser l'identification cible pour les images bidimensionnelles en utilisant au moins un procédé de traitement d'image ou un procédé d'apprentissage machine ou une combinaison de ceux-ci.

10. Procédé d'identification d'au moins un objet cible pour une inspection de sécurité par tomodensitométrie, CT, selon la revendication 1, dans lequel la réalisation (S10) d'une réduction de dimension sur des données CT tridimensionnelles pour générer une pluralité de vues bidimensionnelles à dimension réduite comprend ce qui suit :
définir (S11) une pluralité de directions pour les données CT tridimensionnelles ; et
effectuer une projection ou un rendu (S12) selon la pluralité de directions.

11. Procédé d'identification d'au moins un objet cible pour une inspection de sécurité par tomodensitométrie, CT, selon la revendication 10, dans lequel la pluralité de directions sont des directions arbitraires et ne sont pas limitées à une direction orthogonale à une direction de déplacement d'un objet pendant un processus de détection.

12. Procédé d'identification d'au moins un objet cible pour une inspection de sécurité par tomodensitométrie, CT, selon l'une des revendications 1 à 11, dans lequel la pluralité de vues bidimensionnelles comprend en outre une image radiographique numérique, DR, bidimensionnelle et l'image DR bidimensionnelle est acquise par un dispositif d'imagerie DR,
dans lequel le résultat de reconnaissance tridimensionnelle est projeté (S50) sur l'image DR bidimensionnelle et délivré en tant que résultat de reconnaissance de l'image DR bidimensionnelle.

13. Appareil (100) d'identification d'au moins un objet cible pour une inspection de sécurité par tomodensitométrie, CT, comprenant :
un module de réduction de dimension (10) configuré pour réaliser une réduction de dimension sur des données CT tridimensionnelles pour générer une pluralité de vues bidimensionnelles à dimension réduite ;
un module d'identification bidimensionnelle (20) configuré pour réaliser une identification cible sur une pluralité de vues bidimensionnelles pour obtenir un ensemble de descriptions sémantiques bidimensionnelles de l'au moins un objet cible, dans lequel la pluralité de vues bidimensionnelles comprend la pluralité de vues bidimensionnelles à dimension réduite ; et
un module d'augmentation de dimension (30) configuré pour réaliser une augmentation de dimension sur l'ensemble de descriptions sémantiques bidimensionnelles pour obtenir un résultat de reconnaissance tridimensionnelle de l'au moins un objet cible,
**caractérisé en ce que**
le module d'augmentation de dimension (30) est en outre configuré pour :
mettre en correspondance l'ensemble de descriptions sémantiques bidimensionnelles à un espace tridimensionnel en utilisant un procédé de rétroprojection pour obtenir une carte de probabilité tridimensionnelle ; et
réaliser une extraction de caractéristiques sur la carte de probabilité tridimensionnelle pour obtenir le résultat de reconnaissance tridimensionnelle de l'au moins un objet cible.

14. Support de stockage lisible par machine comprenant un programme, qui, lorsqu'il est exécuté par un processeur, amène un ordinateur à :
réaliser une réduction de dimension sur des données de tomodensitométrie, CT, tridimensionnelles pour générer une pluralité de vues bidimensionnelles à dimension réduite ;
réaliser une identification cible sur une pluralité de vues bidimensionnelles pour obtenir un ensemble de descriptions sémantiques bidimensionnelles de l'au moins un objet cible, dans lequel la pluralité de vues bidimensionnelles comprend la pluralité de vues bidimensionnelles à dimension réduite ; et
réaliser une augmentation de dimension sur l'ensemble de descriptions sémantiques bidimensionnelles pour obtenir un résultat de reconnaissance tridimensionnelle de l'au moins un objet cible,
**caractérisé en ce que**
le programme, lorsqu'il est exécuté par le processeur, amène en outre l'ordinateur à :
mettre en correspondance l'ensemble de descriptions sémantiques bidimensionnelles à un espace tridimensionnel en utilisant un procédé de rétroprojection pour obtenir une carte de probabilité tridimensionnelle ; et
réaliser une extraction de caractéristiques sur la carte de probabilité tridimensionnelle pour obtenir le résultat de reconnaissance tridimensionnelle de l'au moins un objet cible.
